# EUROPÄISCHE PATENTSCHRIFT

(11) **EP 0 590 119 B1**
(45) Veröffentlichungstag und Bekanntmachung des Hinweises auf die Patenterteilung: **29.10.1997**
(21) Anmeldenummer: 93907740.0
(22) Anmeldetag: 15.04.1993
(51) Int. Cl.: A61C 17/40, A61C 17/22, A46B 7/06

(54) **ZAHNREINIGUNGSVORRICHTUNG**
TOOTH CLEANING DEVICE
DISPOSITIF DE NETTOYAGE DENTAIRE

(30) Priorität: 15.04.1992 CH 1261/92
(43) Veröffentlichungstag der Anmeldung: 06.04.1994
(73) Patentinhaber: Maurer, Wilhelm, CH-8103 Unterengstringen (CH)
(72) Erfinder: MAURER, Wilhelm, CH-8103 Unterengstringen (CH); MAURER, Andreas, CH-8046 Zürich (CH)
(74) Vertreter: Troesch Scheidegger Werner AG
(86) Internationale Anmeldenummer: CH9300096
(87) Internationale Veröffentlichungsnummer: WO9320777

(56) Entgegenhaltungen:
- EP-A- 0 173 114
- WO-A-91/13570
- DE-A- 3 931 982
- FR-A- 2 578 408
- US-A- 2 682 066

## Beschreibung

Die vorliegende Erfindung betrifft eine Zahnreinigungsvorrichtung mit einer Antriebsanordnung zum Unterstützen der Zahnreinigung mittels durch die Antriebsanordnung betriebener Reinigungsorgane.

Die vorliegende Erfindung ist eine Weiterentwicklung des Zahnreinigungsgerätes gemäss der europäischen Patentanmeldung Nr. 0 173 114, womit die vorliegende Patentanmeldung eine Fortsetzung und Ergänzung der erwähnten europäischen Patentanmeldung ist.

Wie in der erwähnten europäischen Patentanmeldung angeführt, ist es wesentlich, dass die verschiedenen Zahnflächen mittels eines Reinigungsgerätes gleich gut gereinigt werden können. Es ist also wesentlich, dass insbesondere die innere, d.h. die der Mundhöhle zugekehrte Zahnfläche sowie das Zahnfleisch, und die äussere, d.h. die der Wange zugekehrte Zahnflächenseite sowie ebenfalls das Zahnfleisch, möglichst gleich gut gereinigt werden können. Weiter wichtig ist, dass an allen zu reinigenden Stellen ein bestmöglich örtlicher Reinigungsdruck gewährleistet wird. Letztendlich ist es wichtig, dass die Reinigungsorgane optimale Bewegungsabläufe ausführen, d.h. vom Zahnfleisch aus gerichtet in möglichst zahnaxialer Richtung zur Zahnkrone hin und kaum in entgegengesetzter Bewegungsrichtung.

Grundsätzlich sei auf die Beschreibung der oben erwähnten europäischen Patentanmeldung Nr. 0 173 114 verwiesen. Insbesondere wesentlich für die vorliegende Patentanmeldung ist das in der erwähnten europäischen Patentanmeldung definierte Verfahren zum Reinigen der Zähne mittels eines Zahnreinigungsgerätes, gemäss welchem es wichtig ist, dass die Reinigung gleichzeitig auf mindestens zwei Zahnseiten vorgenommen wird.

In der DE-39 31 982 wird ein elektromotorisch angetriebenes Zahnreinigungsgerät beschrieben, bei welchem eine getrennt von einem Handgriff angeordnete Zahnbürste zwei entgegengesetzte, überlagerte Bewegungen, wie eine Dreh- und eine Hubbewegung, ausführt. Die erzeugten Bewegungen der endständigen Zahnbürste ermöglichen nur das einseitige Reinigen der Zähne und zudem nicht in dental-medizinisch optimaler Art und Weise. Durch das Hin- und Her- sowie Auf- und Abbewegen der Zahnbürste ergibt sich insbesondere eine Schädigung des Zahnfleisches im Bereich des Zahnansatzes.

In der EP-A-0 173 114 werden die verschiedenen Bewegungsabläufe in einem erfindungsgemäss definierten Zahnreinigungsgerät vorwiegend mit pneumatisch oder hydraulisch betätigbaren Antriebsorganen ausgeführt. Obwohl sich die hydraulisch oder pneumatisch betätigbaren Antriebsorgane an sich bewährt haben, ist es eine Aufgabe der vorliegenden Erfindung, den Antriebsmechanismus weiter zu verfeinern und zu vereinfachen, um einerseits die Betriebssicherheit von Zahnreinigungsgeräten weiter zu erhöhen, die Herstellkosten zu senken und letztendlich auch eine kleinere Konstruktion der Reinigungsköpfe zu ermöglichen.

Die erfindungsgemäss definierte Aufgabe wird mittels einer Zahnreinigungsvorrichtung gemäss den Wortlaut nach Anspruch 1 gelöst.

Die im internationalen Recherchenbericht genannte internationale Patentanmeldung WO91/13570 schlägt ein Zahnreinigungsgerät vor, wo mittels eines Antriebsaggregates in Form eines Antriebsschaftes mehrere unterschiedliche Reinigungsorgane an einem Reinigungskopf angetrieben werden. Zum einen wird an zwei kreisrund ausgebildeten Borstenanordnungen eine Hin- und Her-Rotationsbewegung ausgelöst und zum andern an zwischen den Rotationsborsten angeordneten flächigen Borstenanordhungen eine weitgehendst lineare Hin- und Her-Bewegung. Aber an keiner der einzelnen Borstenanordnungen werden mindestens zwei Bewegungsvorgänge ausgelöst, wie dies in der vorliegenden Erfindung als wesentlich in Anspruch 1 vorgeschlagen wird, welches erfindungswesentliche Merkmal schliesslich auch zu den substantiellen Verbesserungen in der Dentalhygiene geführt hat.

So zeigen denn auch Vergleichsversuche beim Zahnärztlichen Institut der Universität Zürich zwischen einem Reinigungsgerät, entsprechend beschrieben in der PCT WO91/13570, und einem Zahnreinigungsgerät, beschrieben gemäss der vorliegenden Erfindung, gravierende Qualitätsunterschiede, indem die Zahnbürste entsprechend der vorliegenden Erfindung jener gemäss WO91/13570 als deutlich überlegen beurteilt wurde. Bei letzterer Zahnbürste, gemäss dem Stand der Technik, bleiben die Borsten vor allem im molaren Bereich häufig stehen, und dies, obwohl die Zahnbürste nicht am geräteeigenen Akku lief, sondern über einen Spannungsregler direkt am Netz. Der Bürstenstillstand war darauf zurückzuführen, dass die beiden oszillierenden Reinigungsräder relativ eng beieinanderstehen. Dieses enge Beieinanderstehen ist wichtig, damit die gleichzeitige Reinigung bukal und lingual im Frontzahnbereich garantiert ist. Im molaren Bereich jedoch führt dies dazu, dass mangels Platz die Bürste mit relativ grosser Kraft angesetzt werden muss, damit die relativ breiten Molaren überhaupt zwischen die Reinigungsräder zu liegen kommen. Würden nun die beiden oszillierenden Reinigungsräder weiter voneinanderliegend angeordnet, so wäre das Gesamtreinigungsresultat ungenügend. Dieser Nachteil könnte beispielsweise, wie gemäss der vorliegenden Erfindung vorgeschlagen, dadurch gelöst werden, indem die beiden oszillierenden Reinigungsräder gleichzeitig eine Voneinander- bzw. Zueinanderbewegung ausführen würden, was aber in der WO91/13570 nicht vorgeschlagen wird.

Damit ergibt sich als Fazit, dass die WO91/13570 nicht dazu geeignet ist, eine Lösung vorzuschlagen, welche die markante Reinigungsverbesserung in der Dentalhygiene ermöglicht, wie sie sich gemäss der vorliegenden Erfindung einstellt.

Vorgeschlagen wird eine Zahnreinigungsvorrichtung bzw. ein Zahnreinigungsgerät mit einer Antriebsanordnung zum Unterstützen der Zahnreinigung mittels durch die Antriebsanordnung betriebener Reinigungsorgane, welche mindestens ein mechanisches und/oder elektromagnetisches Antriebsorgan aufweist, das mit den Reinigungsorganen wirkverbunden ist, um wenigstens einen Teil der Reinigungsorgane und/oder Abschnitte davon für mindestens zwei Bewegungsvorgänge anzutreiben.

Eine erfindungsgemäss definierte Zahnreinigungsvorrichtung umfasst einen Handgriff, umfassend beispielsweise einen Antriebsmotor oder Elektroanschluss, und ein am Handgriff beispielsweise wieder lösbar aufsteckbares Kopfteil, wobei die Reinigungsorgane an oder in einem im wesentlichen wenigstens nahezu endständig am Kopfteil angeordneten Reinigungskopf vorgesehen sind, in welchem Reinigungskopf mindestens ein Teil der Reinigungsorgane derart angeordnet ist, dass mindestens zwei Relativbewegungsvorgänge in bezug auf das Kopfteil ausgelöst werden. Vorzugsweise ist der Reinigungskopf wenigstens drehbeweglich und/oder schwenkbar mit dem Kopfteil verbunden.

Das durch den Antriebsmotor angetriebene, mindestens eine Antriebsorgan ist derart im Bereich von Kopfteil und Reinigungskopf ausgebildet, dass sich die Wirkverbindung derart durch die Verbindung von Kopfteil und Reinigungskopf hindurch erstreckt, dass an mindestens einem Teil der Reinigungsorgane die beiden Relativbewegungsvorgänge in bezug auf das Kopfteil bewirkt werden.

Der Reinigungskopf ist vorzugsweise mindestens zweiteilig ausgebildet, wobei das eine Teil beweglich mit dem anderen Teil verbunden ist.

Damit, wie erfindungsgemäss gefordert, die Zähne mindestens von zwei Seiten her gleichzeitig mittels der Reinigungsorgane gereinigt werden können, weist der Reinigungskopf eine, von einem Zahn betrachtet, konkave Trägerpartie auf, wobei die Reinigungsorgane zur Umfassung der Zähne auf mindestens zwei ihrer Seiten, vorzugsweise auf der Innenseite der konkaven Trägerpartie, angeordnet sind. Die erfindungsgemäss definierte konkave Trägerpartie kann das eine Teil des zweiteilig ausgebildeten Reinigungskopfes bilden, welche Trägerpartie vorzugsweise eine U-förmige Fassung aufweist mit mindestens an den beiden Schenkeln nach innen gerichteten Reinigungsorganen.

Die Träger- bzw. Reinigungspartie ist vorzugsweise im wesentlichen gemeinsam mit dem anderen Teil drehbeweglich und/oder schwenkbar am Kopfteil gelagert, wobei zusätzlich die Trägerpartie relativbeweglich in bezug auf den anderen Teil angeordnet sein kann.

Das erfindungsgemäss definierte, mindestens eine mechanische und/oder elektromagnetische Antriebsorgan bewirkt mindestens zwei Bewegungsvorgänge an mindestens einem Teil der Reinigungsorgane oder an Abschnitten davon, welche an der Trägerpartie angeordnet sind.

Die U-förmig ausgebildete Trägerpartie umfasst einerseits eine Trägerbasis und anderseits je seitlich Schenkelabschnitte, welche Schenkelabschnitte um je eine im Bereich der Basis oder endständig angeordnete Achse in einer Bezugsrichtung in Schenkelrichtung zueinander linear, beweglich mit der Basis verbunden, gelagert sind.

Das mindestens eine Antriebsorgan ist einerseits mit der Trägerbasis wirkverbunden für die Durchführung einer hubartigen Relativbewegung der Basis in bezug auf das Kopfteil bzw. in bezug auf das andere Teil des Reinigungskopfes und anderseits wirkverbunden mit den Schenkelabschnitten für die Durchführung einer Relativschwenk- bzw. Hub- oder Kippbewegung der Abschnitte in bezug auf die Basis um die im Bereich der Basis angeordneten Achsen.

Das mindestens eine Antriebsorgan ist vorzugsweise vorgesehen für je eine zyklische Bewegung von Basis und Schenkelabschnitten, wobei die Reinigungsorgane in der U-Ebene der Trägerpartie in sich geschlossene, vorzugsweise zweidimensionale Bewegungsbahnen ausführen, wobei die gegen die U-Symmetrieebene gerichteten Bahnschenkel zur Trägerbasis bzw. zum Kopfteil hin gerichtet durchlaufen werden.

Die Schenkelabschnitte sind vorzugsweise an der Trägerbasis gegen die U-Symmetrieebene hin vorgespannt gelagert angeordnet, so dass die Bewegung der Reinigungsorgane an den Schenkelabschnitten und der Reinigungsdruck in Richtung von einer Zahnwurzel zur Zahnkrone hin erfolgt und zurück unter zumindest reduziertem Druck unter Wirkung des bzw. der Antriebsorgane, welche gegen die Vorspannung wirken.

In einer analogen, weiter vorgeschlagenen erfindungsgemässen Ausführungsvariante des Zahnreinigungsgerätes wird die Trägerpartie des Reinigungskopfes zyklisch phasenverschoben zu den Schenkelabschnitten durch das mindestens eine Antriebsorgan derart angesteuert, dass bei einer Bewegung der Trägerpartie bzw. der Trägerbasis in Richtung im wesentlichen senkrecht vom Kopfteil weg die Schenkelabschnitte weitgehendst in voneinander weggekippter Stellung angeordnet sind und bei der entgegengesetzten Bewegung der Trägerpartie bzw. der Trägerbasis zum Kopfteil hin die Schenkelabschnitte in zueinander geneigter, abgekippter Stellung angeordnet sind.

Gemäss einer Ausführungsvariante ist mindestens ein Antriebsorgan vorgesehen, das wellenförmig ausgebildet ist, welche Welle im Bereich der Verbindung zwischen Kopfteil und Reinigungskopf mindestens zwei voneinander unterschiedlich exzentrisch ausgebildete Abschnitte aufweist, wobei jeder der Abschnitte je einen Bewegungsablauf wenigstens eines Teils der Reinigungsorgane bewirkt.

Vorzugsweise ist die Welle im wesentlichen gleichmässig rotierend angetrieben, und einer der beiden exzentrisch ausgebildeten Abschnitte ist mit der Trägerpartie bzw. der Trägerbasis für das Ausführen der Hubbewegung in bezug auf das Kopfteil wirkverbunden, und der andere Abschnitt der Welle ist mit den Schenkelabschnitten für das Ausführen der Schwenkbewegungen in bezug auf die Trägerbasis wirkverbunden, wobei die beiden Abschnitte an der Welle derart zueinander winkelverschoben angeordnet sind, dass die beiden Bewegungsvorgänge von Trägerpartie und der Schenkelabschnitte phasenverschoben ausgeführt werden.

Bevorzugte Ausführungsvarianten von mit einer vorab definierten Welle angetriebenen Reinigungsorganen an einem Zahnreinigungsgerät sind in den Ansprüchen 13 und 14 definiert.

Anstelle der oben erwähnten erfindungsgemäss definierten Antriebswelle ist es selbstverständlich auch möglich, die Reinigungsorgane für die Durchführung der mindestens zwei Bewegungsvorgänge mittels Seilzügen anzutreiben. Bevorzugte Ausführungsvarianten eines Zahnreinigungsgerätes, dessen Reinigungsorgane mit Seilzügen angetrieben sind, sind in den Unteransprüchen 15 bis 17 charakterisiert.

Anstelle von Seilzügen ist es auch möglich, eine oder mehrere hin und her rotierende Nockenwellen für das Bewirken der beiden Bewegungsvorgänge anzuordnen. Weiter ist es möglich, gestangeartige Antriebe zu verwenden, wobei es auch möglich ist, zwischen die Antriebsorgane und die Reinigungsorgane getriebeartige Elemente zwischenzuschalten.

Weitere Ausführungsvarianten des erfindungsgemässen Zahnreinigungsgerätes sind in den Ansprüchen 18 bis 20 charakterisiert.

Anstelle von mechanischen Antriebsorganen ist es auch möglich, elektromagnetische Antriebsorgane zu verwenden, wobei einerseits in Bereich der Reinigungsorgane am Reinigungskopf ferromagnetische Elemente angeordnet werden können und anderseits an entgegengesetzten Abschnitten am Reinigungskopf und/oder am Kopfteil Elektromagnete, wobei durch unter Strom Setzen der Elektromagnete diese die Bewegungsvorgänge der Reinigungsorgane bewirken. Selbstverständlich ist es auch möglich, die Anordnung umgekehrt zu wählen, d.h. die ferromagnetischen Elemente an den den Reinigungsorganen entgegengesetzten Abschnitten des Kopfes und die Elektromagnete im Bereich der Reinigungsorgane.

Die Reinigungsorgane, versehen mit den ferromagnetischen Elementen, können von den entgegengesetzt angeordneten Elektromagneten weg vorgespannt angeordnet sein, damit sie bei Nichtbetätigen der Elektromagnete in Richtung von den Elektromagneten weggetrieben werden. Auf Vorspannmittel kann aber auch verzichtet werden, so dass bei Nichtbetätigen der Elektromagnete die Reinigungsorgane frei beweglich, d.h. lose gelagert sind.

Selbstverständlich ist es auch möglich, alle oben erwähnten Antriebsorgane, wie Wellen, Nockenwellen, Seilzüge, Gestänge, Elektromagnete etc., miteinander zu kombinieren.

Da es sich, wie eingangs erwähnt, als vorteilhaft erwiesen hat, dass der Reinigungsdruck der Reinigungsorgane an den Zähnen vorzugsweise während der ganzen Reinigungsoperation im wesentlichen möglichst konstant bleibt, ist es vorteilhaft, die schenkelabschnitte der Trägerpartie mittels von zu den Reinigungsorganen an den entgegengesetzten Seiten angreifenden blattfederartigen Spannmitteln gegen die U-Symmetrieebene der Trägerpartie vorzuspannen. Diese Blattfedern, welche quasi von der Rückseite an die Schenkelabschnitte angreifen, sind derart an der Trägerbasis angeordnet, dass sich deren Drehpunkt beim Abkippen der Schenkelabschnitte im wesentlichen in Basislängsrichtung derart verschiebt, dass die Federkraft infolge ungleicher Hebelwirkung unterschiedlich ist und dadurch der Anpressdruck der Reinigungsorgane an den zu reinigenden Zähnen in etwa gleichbleibend ist.

In einer weiter vorgeschlagenen Ausführungsvariante weist ein Zahnreinigungsgerät ein Kopfteil bzw. einen Reinigungskopf auf, der um ca. 180° in bezug auf den Handgriff drehbar ist, um das Reinigen der Ober- und Unterzähne bei gleicher Handgriffhaltung zu ermöglichen.

Die Erfindung wird nun anschliessend und beispielsweise unter Bezug auf die beigefügten Figuren näher erläutert.

Dabei zeigen:
- Fig. 1: im Längsschnitt schematisch dargestellt, eine mögliche Ausführungsvariante eines erfindungsgemässen Reinigungskopfes eines Zahnreinigungsgerätes,
- Fig. 2: im Längsschnitt eine weitere Ausführungsvariante eines Reinigungskopfes,
- Fig. 3a und 3b: schematisch dargestellt im Längsschnitt, eine weitere Ausführungsvariante des Antriebsmechanismus von Reinigungsorganen in einem Reinigungskopf,
- Fig. 4: eine weitere Ausführungsvariante im Längsschnitt eines erfindungsgemässen Reinigungskopfes,
- Fig. 5: schematisch dargestellt den bevorzugten Bewegungsablauf der Reinigungsorgane von einem der Reinigungsköpfe der Fig. 1 bis 4,
- Fig. 6: in Längsperspektive schematisch dargestellt, eine weitere Ausführungsvariante eines erfindungsgemässen Reinigungskopfes,
- Fig. 7 bis 14: Bestandteile, einzeln und vergrössert dargestellt, des Reinigungskopfes von Fig. 6,
- Fig. 15a bis 15d: schematisch, anhand eines Längsschnittes durch den Reinigungskopf von Fig. 6, die Funktionsweise desselben und
- Fig. 16: schematisch dargestellt, den Bewegungsablauf der Antriebswelle im Reinigungskopf von Fig. 6 anhand einer Vielzahl von Wellenstellungen, in Längsrichtung der Welle gesehen.

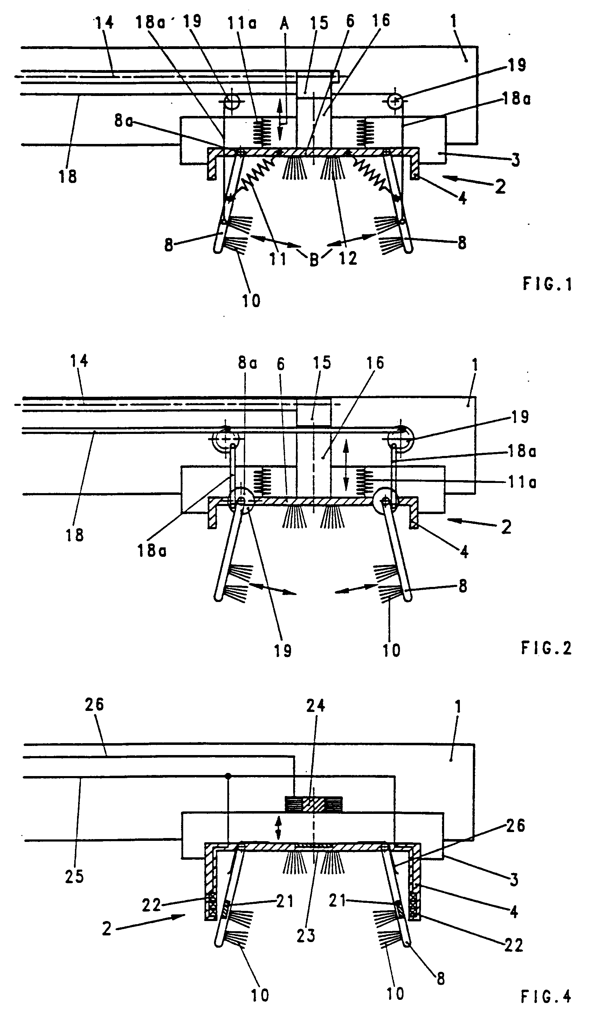

In Fig. 1 ist im Längsschnitt ein Reinigungskopf eines erfindungsgemässen Zahnreinigungsgerätes dargestellt, wobei auf die Darstellung des entsprechenden Handgriffes verzichtet worden ist. Endständig am Kopfteil 1 ist ein Reinigungskopf 2 angeordnet, der um seine Mittelachse drehbar mit dem Kopfteil 1 verbunden ist. Der Reinigungskopf 2 besteht aus einem schalenförmigen Element 3 und einer U-förmig ausgebildeten Trägerpartie 4, bestehend aus einer Trägerbasis 6 und seitlich um je eine Achse 8a schwenkbar angeordnete Schenkelabschnitte 8. Die Trägerpartie 4 ist in Querrichtung zum Kopfteil 1 verschieblich angeordnet, d.h. die Trägerpartie 4 ist in der Lage, eine quer zum Kopfteil 1 verlaufende Hin- und Her-Hubbewegung auszuführen. An den Schenkelabschnitten bzw. Hebeln 8 sind innenliegend Reinigungsborstenbündel 10 angeordnet, wobei weiter ebenfalls ein Reinigungsborstenbündel 12 an der Trägerplattenbasis 6 angeordnet werden kann.

Für das Ausführen der Hin- und Her-Hubbewegung der Trägerpartie 4 ist diese über einen zylinderartigen Körper 16 in Querrichtung zum Kopfteil 1 verschieblich gelagert und mit einer Nockenwelle 14 verbunden, wobei ein an der Nockenwelle 14 angeordneter Nocken 15 für das Wegtreiben der Trägerpartie 4 von der Welle 14 verantwortlich ist. Sobald der Nocken 15 auf die der Trägerpartie 4 entgegengesetzten Seite der Welle rotiert wird, wird die Trägerpartie 14 beispielsweise mittels Federelementen 11a gegen das Kopfteil 1 zurückgezogen. Die Hin- und Her-Hubbewegung der Trägerpartie 14, bestehend aus Basis 6 und Hebel 8 mit den Reinigungsorganen 10 und 12, ist schematisch durch den Doppelpfeil A dargestellt.

Die Hin- und Her-Kippbewegung der Hebel 8, schematisch dargestellt durch den Doppelpfeil B, um je die Achse 8a, erfolgt mittels eines Seilzuges 18, der je über Umlenkrollen 19 und getrennte Seilabschnitte 18a mit je einem der Hebel 8 verbunden ist. Durch Ziehen am Seilzug 18 werden die beiden Hebel mit den Reinigungsbürsten 10 von der Mittelsymmetrieachse der U-förmigen Trägerpartie 4 weggezogen, währenddem beim Loslassen des Seilzuges 18 die beiden Federelemente 11 die beiden Hebel gegen die Symmetrieachse der Trägerpartie 4 zurückziehen.

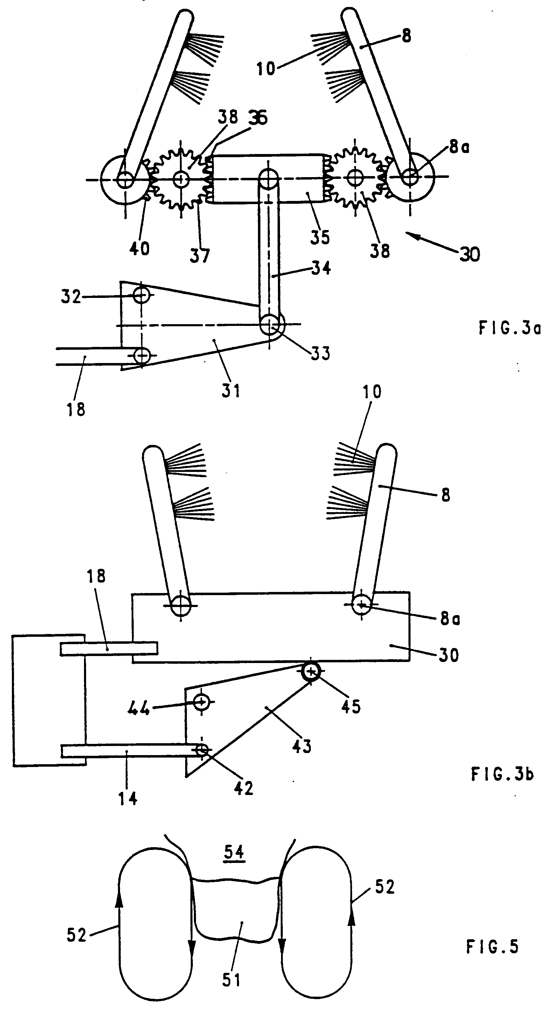

Die beiden Antriebsorgane 14 und 18 sind vorzugsweise derart synchron gekoppelt, dass bei Hubbewegung der Trägerpartie 4 vom Kopfteil weg die beiden Hebel 8 mit den Reinigungsbürsten 10 in nach rückwärts gekippter, geöffneter Stellung verweilen, währenddem bei der Rückwärtsbewegung der Trägerpartie 4 gegen das Kopfteil 1 hin die beiden Hebel 8 gegen die Mitte hin gekippt angeordnet sind. Auf den Bewegungsablauf der Reinigungsbürsten 10 wird unter Bezug auf Fig. 5 detaillierter eingegangen. Die Antriebswelle 14 sowie der Seilzug 18 können durch x-beliebige Antriebsmechanismen bzw. Antriebsaggregate betrieben werden. Vorteilhafterweise handelt es sich um ein und dasselbe Antriebsaggregat, wobei der synchrone Antrieb der beiden Elemente beispielsweise über ein entsprechendes Verteilgetriebe erfolgen kann.

In Fig. 2 ist im Prinzip ein analoger Reinigungskopf wie in Fig. 1 im Längsschnitt dargestellt, allerdings ist anstelle des Seilzuges 18 ein Gestänge vorgesehen, welches über Umlenkrollen 19 und Verbindungsstangenelemente 18a mit entsprechenden Antriebsscheiben 8a der beiden Hebel 8 verbunden ist. Für die Hin-und Her-Hubbewegung der Trägerpartie 4 ist erneut eine Nockenwelle 14 mit einem Nocken 15 vorgesehen, wobei in Fig. 2 der Nocken 15 in zur Trägerpartie 4 entfernter Position dargestellt ist, womit sich die Trägerpartie 4 in zurückgezogener Position befindet.

Der Vorteil der Verwendung des Gestänges 18 könnte darin liegen, dass es nach wie vor relativ schwierig ist, entsprechende Kunststoffmaterialien für Seilzüge zu finden, die den Anforderungen in einer derartig komplizierten Anwendung genügen. Allerdings werden bei Verwendung von hochwertigen Kunststoffmaterialien, wie beispielsweise von Polyamid 12 oder von aromatischen Polyamiden, wie beispielsweise Aramid, die Anforderungen vollauf erfüllt. Wichtig bei derartigen Seilzügen ist ja, dass das Material praktisch keine Dehnbarkeit aufweist, gute Elastizität aufweist und hohe Abriebfestigkeit aufweist. Dazu kommen geringe Wasseraufnahme und Chemikalienbeständigkeit gegenüber den normalerweise bei Zahnreinigung verwendeten Reinigungssubstanzen.

Der weitere Vorteil der Verwendung eines Gestänges 18 liegt darin, dass auf Rückzugfedern 11 verzichtet werden kann, da die Hin- und Her-Bewegung der Hebel 8 durch Hin- und Her-Rotation der Drehscheibe 8a bewerkstelligt wird. Allerdings kann auch diese Forderung durch doppelt, d.h. hin und zurück, geführte Seilzüge erfüllt werden.

In Fig. 3a und 3b ist eine weitere Antriebsmöglichkeit der Reinigungsorgane in der Trägerpartie 4 schematisch im Längsschnitt dargestellt, wobei Fig. 3a den Antrieb bzw. die Hin- und Her-Kippbewegung der beiden Hebel 8 darstellt, währenddem in Fig. 3b die Hin- und Her-Hubbewegung der Trägerpartie 4 in bezug auf das Kopfteil 1 dargestellt ist.

In Fig. 3a wird erneut durch ein stangenartiges Element 18 ein um eine Achse 32 schwenkbares Element 31 hin und her bewegt, wodurch eine um eine Achse 33 drehbar mit dem Element 31 verbundene Stange 34 einen je seitlich mit einer Zahnung 36 versehenen Körper 35 auf und ab bewegt. Je mit der Zahnung 36 verbunden ist ein Zahnrad 38, wobei die Zahnung 37 in der Zahnung 36 eingreift. An der gegenüberliegenden Seite am Zahnrad 38 greift die Zahnung 39 in eine entsprechende Zahnung 40 am Hebel 8 ein, um den Hebel 8 um die Achse 8a hin und her zu schwenken. Wird nun an der Stange 18 gezogen, so werden ebenfalls die Stange 34 und der Körper 35 nach unten gezogen, womit durch die getriebeartige Uebertragung dieser Bewegung der Hebel 8 von der U-Symmetrieachse nach aussen geschwenkt wird. Durch entgegengesetzte Bewegung der Stange 18 in Richtung zum Element 31 hin werden Stange 34 und Körper 35 nach oben gestossen, womit die beiden Hebel einwärts gekippt werden.

In Fig. 3b ist die Antriebsanordnung gemäss Fig. 3a schematisch als "black box" und bezeichnet mit der Referenzzahl 30 dargestellt, welche in ihrer Gesamtheit, zusammen mit den beiden Hebeln 8, die Auf- und Ab-Hubbewegung ausführen. Der Antrieb der Hubbewegung erfolgt dadurch, dass eine weitere Stange 14 vorgesehen ist, welche erneut ein um eine Achse 44 drehbares Element 43 gegen die Trägerpartie bzw. von dieser weg treibt. Vorzugsweise ist endständig am Element 43 ein rollenartiges Element 45 vorgesehen, womit die "black box" 30 "rollengelagert" hubartig hin und her bewegt wird. Erneut ist es durch entsprechende synchrone Steuerung der beiden Antriebsstangen 14 und 18 möglich, den unter Bezug auf Fig. 1 beschriebenen Bewegungsablauf zu ermöglichen.

In Fig. 4 ist im Längsschnitt erneut ein Kopfteil 1 eines erfindungsgemässen Zahnreinigungsgerätes dargestellt, erneut endständig aufweisend einen Reinigungskopf 2, bestehend aus der Schale 3 und der die Hin- und Her-Hubbewegung ausführenden Trägerpartie 4. Der Antrieb für die Hubbewegung der Trägerpartie 4 bzw. der Trägerbasis 6 wie auch der Antrieb der Hin- und Her-Kippbewegung der beiden Hebel 8 mit den Reinigungsborsten 10 erfolgt in Fig. 4 nicht auf mechanische Art und Weise, sondern mittels eines elektromagnetischen Antriebs. Für die Hin- und Her-Hubbewegung der Trägerpartie 4 ist ein Elektromagnet 24 angeordnet, bestehend aus Metallkörper und Spule, wobei letztere durch eine elektrische Leitung 26 gespeist wird. Gegenüberliegend zum Elektromagneten 24 ist an der Trägerbasis 6 ein Metallteil bzw. ein Gegenpol 23 angeordnet, der bei unter Strom Setzung des Elektromagneten 24 von diesem angezogen wird. Die entsprechende Gegenbewegung vom Elektromagneten 24 weg kann entweder dadurch erfolgen, dass der Elektromagnet 24 umgepolt wird, oder aber mittels Federelementen, analog denjenigen, dargestellt in Fig. 1.

Auf analoge Art und Weise erfolgt die Ausführung der Kippbewegungen der beiden Hebel 8, wobei in U-Schenkeln der Trägerpartie 4 Elektromagnete 22 angeordnet sind, welche über eine Leitung 25 mit elektrischem Strom gespeist werden. Durch Anordnen von entsprechenden Gegenpolen bzw. Metallelementen 21 an der den Reinigungsborsten entgegengesetzten, endständigen Seiten der beiden Hebel 8 können letztere je durch den Elektromagneten 22 angezogen werden, wenn diese unter Strom gesetzt werden. Die Einwärts-Kippbewegung der beiden Hebel 8 erfolgt vorzugsweise mittels blattfederartiger Elemente 26, welche an der Rückseite der beiden Hebel 8, gegen diese drückend, angeordnet sind.

Unter Bezug auf Fig. 5 ist nun schematisch der bevorzugte Bewegungsablauf der Reinigungsborsten 10 beim Reinigen und Massieren des Zahnfleisches und der Zähne dargestellt. Der Bewegungsablauf der an den Hebeln 8 angeordneten, einwärts gerichteten Reinigungsborsten 10 entspricht den beiden Bahnen 52, welche beidseitig, d.h. an der Front- und der Rückseite eines schematisch dargestellten Zahnes, erfolgen. Die Reinigungsborsten bewegen sich entfernt vom Zahn 51 gegen den Zahnfleischbereich 54, worauf die Bahn am entferntesten Punkt gegen den Zahnfleischbereich 54 verläuft, um dann angelegt am Zahn 51 vom Zahnfleisch 54 weg zur Spitze des Zahnes 51 zu erfolgen. Ueber der Spitze des Zahnes 51 angelangt, kippen dann die Hebel 8 gemäss den Fig. 1 bis 4 nach aussen, womit der Reinigungsdruck der Borsten am Zahn reduziert wird, um erneut gegen das Zahnfleisch 54 bewegt zu werden.

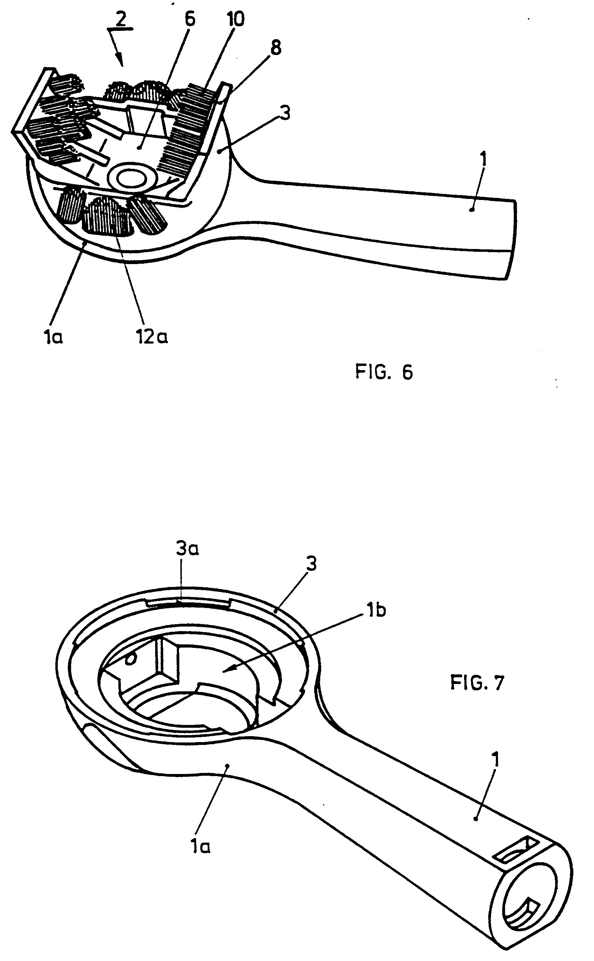

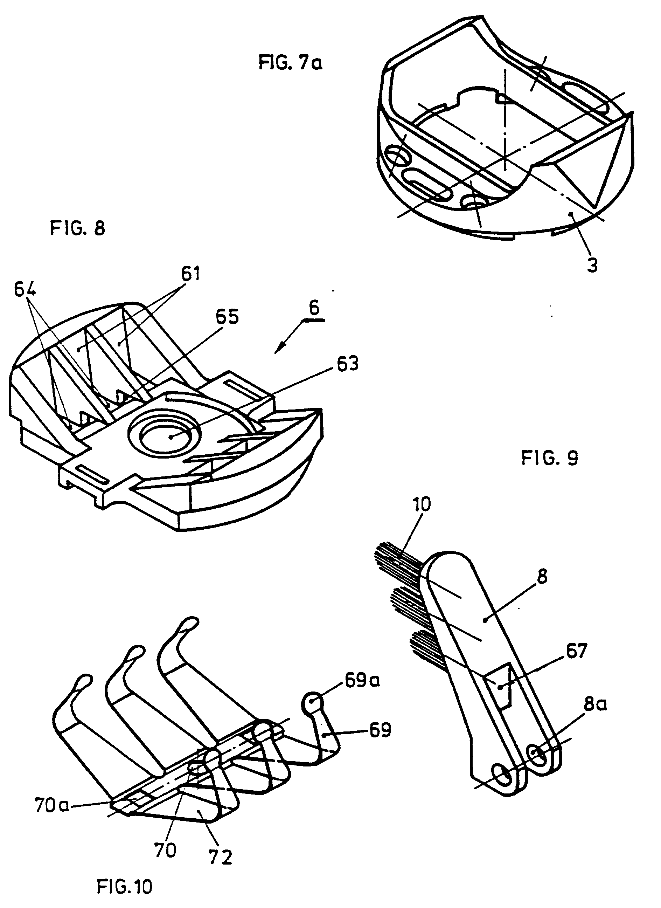

In Fig. 6 ist in Perspektive eine beispielsweise bevorzugte Ausführungsvariante eines Reinigungskopfes 2 an einem Kopfteil 1 dargestellt. Am endständigen Bereich 1a des Kopfteils aufgesetzt und drehbar beweglich mit diesem verbunden ist eine Schale 3, welche je seitlich Reinigungsborsten 12a aufweist zur Reinigung des Zahnes hauptsächlich bukkalseitig. Mittig in der Schale 3 eingelassen angeordnet ist eine Trägerplattenbasis 6, welche seitlich, je schwenkbar mit dieser verbunden, bevorzugt je drei Hebel bzw. Schenkelabschnitte 8 aufweist, mit den innenliegend angeordneten Reinigungsborsten 10. Unter Bezug auf die nachfolgenden Fig. 7 bis 14 sind die einzelnen Teile des erfindungsgemässen Kopfteiles und Reinigungskopfes gemäss Fig. 6 einzeln und vergrössert im Detail dargestellt.

Fig. 7 zeigt erneut in Perspektive das Kopfteil 1 mit der endständigen Partie 1a, innenliegend aufweisend eine im wesentlichen kreisrund ausgebildete, hohlförmige Aufnahme 1b, für das Aufnehmen und die Lagerung des Reinigungskopfes. An der endständigen Randpartie dieser Aussparung 1b sind Nuten 3a angeordnet für die drehbare Aufnahme der Schale 3, welche in Fig. 7a ohne die entsprechenden Reinigungsborsten 12a dargestellt ist.

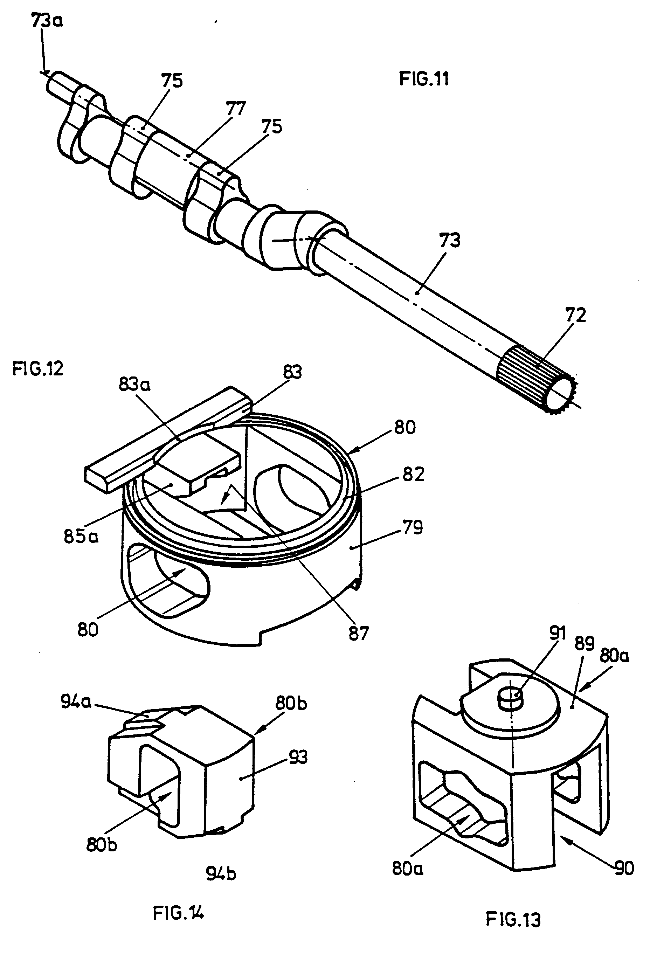

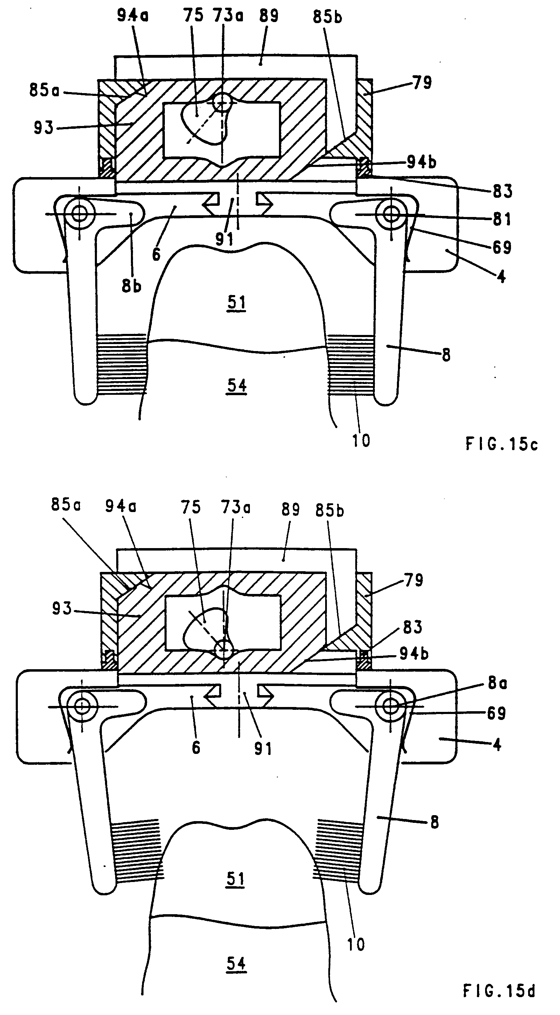

Fig. 8 zeigt die Trägerpartiebasis 6, umfassend eine mittig angeordnete Aussparung 63, auf welche unter Bezug auf Fig. 13 näher eingegangen wird. Weiter umfasst die Basis 6 je seitlich drei Aussparungen 61 für die Aufnahme von entsprechenden Hebeln 8, dargestellt in Fig. 9. Die Halterung der Hebel 8 in den Aufnahmen 61 erfolgt durch Bolzen (nicht dargestellt), welche sich durch die entsprechenden Achsöffnungen 8a in den Hebeln 8 und Aussparungen 65 in der Basis 6 erstrecken. Damit sind die Hebel 8 um die Achse 8a schwenkbar auf der Basis 6 gelagert. Die Aussparungen 61 sind zusätzlich in ihrem unteren Bereich offen, d.h. im Bereich unterhalb der Hebel 8 sind Oeffnungen 64 vorgesehen, auf deren Bedeutung unter Bezug auf die Fig. 15a bis 15d näher eingegangen wird.

Der Hebel von Fig. 9 weist an seiner innenliegenden Seite drei Reinigungsborstenbündel 10 auf, wobei selbstverständlich auch eine andere Anordnung der Borsten gewählt werden kann. Auf der entgegengesetzten Seite ist am Hebel 8 eine Auflagepartie 67 vorgesehen für das schleifende Aufliegen eines entsprechenden, endständigen Anliegeabschnittes 69a von einer Federanordnung 69 gemäss Fig. 10. Die Federanordnung 69 von Fig. 10 wird direkt auf der Trägerplattenbasis 6 derart angeordnet, dass sich die einzelnen Federabschnitte unterhalb der Hebel 8 hindurch erstrecken, um je an der rückseitigen Auflagepartie 67 mit den endständigen Abschnitten 69a, gegen erstere drückend, anzuliegen. Mittels der blattfederartigen Anordnung 69 werden die insgesamt sechs Hebel 8 gegen die mittige Symmetrieebene der Trägerpartie getrieben. Mittels Aussparungen 70 und 70a kann die Spannfederanordnung 69 auf der Basis 6 einrastend festgehalten werden.

In Fig. 11 ist nun die in Fig. 6 nicht sichtbare Antriebswelle 11 dargestellt, welche verwendet wird für das Ausführen sowohl der Hin- und Her-Hubbewegung der Trägerpartie bzw. Basis 6 wie auch für die Ausführung der Einwärts- und Auswärts-Kippbewegung der insgesamt sechs Hebel 8 mit den Reinigungsborsten 10. Die Antriebswelle 73 kann beispielsweise mittels einer endständig angeordneten, zahnradförmigen Partie 72 durch die Verbindung von Kopfteil 1 zum Handgriff hindurch angetrieben werden. Der Antrieb erfolgt dabei vorzugsweise gleichmässig linear rotierend um die Achse 73a. Wie erfindungsgemäss gefordert, umfasst die Antriebswelle 73 mindestens zwei unterschiedlich exzentrisch ausgebildete Abschnitte, wobei der eine Abschnitt den zentralen Bereich 77 umfasst und der andere Abschnitt die beiden seitlich anliegenden Abschnitte 75, welche identisch ausgebildet sind. Die Welle 73 erstreckt sich durch Oeffnungen 80 in den Seitenwandungen von einem ringförmigen Hohlkörper 79 gemäss Fig. 12, der innenliegend einen quer zur Welle verlaufenden Hohlraum 87 aufweist und der vorgesehen ist, um in der Aussparung 1b des Kopfteils 1 von Fig. 7 angeordnet zu werden. An seiner Oberseite weist der Hohlkörper 79 einen rinnenförmigen Ringabschluss 82 auf, in welchem mittels eines Kugellagers 83a ein Auflagekörper 73 frei drehbar angeordnet ist. Auf die Bedeutung dieses Auflagekörpers 83 wird später unter Bezug auf die Fig. 15a bis 15d eingegangen.

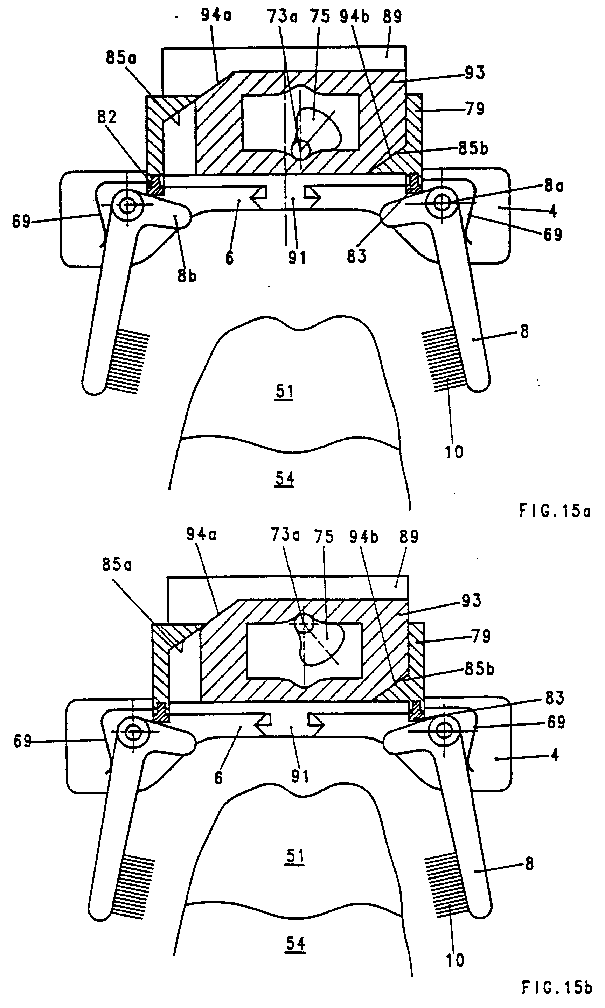

Weiter weist der Hohlkörper 79 einen gegen den hohlförmigen Innenraum 87 gerichteten Anschlag 85a auf, auf dessen Bedeutung unter Bezug auf Fig. 14 näher eingegangen wird. Im hohlförmigen Innenraum 87 angeordnet ist ein Grundkörper 89 gemäss Fig. 13, der seitlich je im Bereich der beiden Oeffnungen 80 seinerseits Oeffnungen 80a aufweist, durch welche hindurch sich ebenfalls die Welle 73 von Fig. 11 erstreckt. Auf seiner Innenseite weist der Grundkörper 89 eine quer zur Welle verlaufende Rinne 90 auf, in welcher hin und her beweglich gelagert ein Schlitten 93 angeordnet ist, wie in Fig. 14 dargestellt. Auf seiner oberen Seite weist der Grundkörper 89 einen Nocken 91 auf, auf welchem aufgesetzt, drehbeweglich gelagert, die Trägerbasis 6 zu liegen kommt, wobei sich der Nocken 91 durch die zentrale Oeffnung 63 der Trägerbasis hindurch erstreckt. Der in Fig. 14 dargestellte Schlitten 93 weist ebenfalls mittig und im Bereich der Oeffnung 80a eine entsprechende lochartige Oeffnung 80b auf, durch welche hindurch sich erneut die Welle 73 von Fig. 11 erstreckt. Der Schlitten 93 ist in der Rinne 90 vom Grundkörper 89 in Richtung quer zur Welle hin und her bewegbar, wobei bei Bewegung in der einen Richtung die Gleitpartie 94a am Anschlag 85a des ringförmigen Hohlkörpers 79 anstösst und entsprechend den Hohlkörper 79 nach oben treibt. Wird der Schlitten 93 in entgegengesetzte Richtung bewegt, so stösst die entsprechende Gleitpartie 94b an dem entgegengesetzt zum Anschlag 85a am ringförmigen Hohlkörper 79 angeordneten Anschlag 85b (in Fig. 12 nicht dargestellt) an, womit der Hohlkörper 79 in entgegengesetzte Richtung nach unten getrieben wird. Der eben geschilderte Bewegungsablauf wird unter Bezug auf die nachfolgenden Fig. 15a bis 15d näher erläutert.

Wesentlich für den synchronen Ablauf der Reinigungsoperationen, wie vorab beispielsweise unter Bezug auf Fig. 1 und Fig. 5 erläutert, ist die Ausgestaltung der beiden Aussparungen bzw. Oeffnungen 80a und 80b von Grundkörper 89 und von Schlitten 93. Die Welle 73 greift mit den beiden identischen Partien 75 an den beiden Aussparungen bzw. Oeffnungen 80a vom Grundkörper 89 an, wobei der Grundkörper 89 in Richtung quer zur Welle nach oben und nach unten bewegt wird. M.a.W. heisst das, dass der Grundkörper 89 und damit verbunden die Trägerpartie 6 vom Kopfteil weg und zum Kopfteil hin mittels der Abschnitte 75 getrieben wird. Der andere Abschnitt 77 greift an der Oeffnung 80b vom Schlitten 93 an und bewegt diesen quer zur eben erwähnten Hubbewegung des Grundkörpers 89 entlang der Rinne 90, bis der Schlitten 93 mit der entsprechenden Partie 94a am Anschlag 85a des Hohlkörpers 79 anstösst und diesen, die Hubbewegung des Grundkörpers 89 überlagernd, in gleicher Richtung nach oben treibt.

Die genaue Funktionsweise und der Bewegungsablauf der einzelnen, vorab unter Bezug auf die Fig. 8 bis 14 dargestellten Elemente werden nun unter Bezug auf die Fig. 15a bis 15d näher erläutert.

In Fig. 15a ist im Längsschnitt der Reinigungskopf von Fig. 6 (ohne Schale 3) dargestellt, bereit für die Hubbewegung der Trägerpartie 4 weg vom nicht dargestellten Kopfteil. Durch die Stellung der Wellenabschnitte 75 in Richtung weg von der Wellenachse 73a hin zum Kopfteil sind entsprechend der Grundkörper 89 und der Schlitten 93 in sogenannt zurückgezogener Position angeordnet. Durch Anstossen des Schlittens 93 mit seiner Gleitpartie 94b am entsprechenden Anschlag 85b des ringförmigen Hohlkörpers 79 ist letzterer in vom Kopfteil 1 entfernter Position, womit der auf der ringförmigen Rinne 82 kugelgelagert angeordnete Auflagekörper 83 durch die Oeffnungen 64 der Trägerbasis 6 hindurch gegen Vorsprünge 8b der beiden dargestellten Hebel 8 anliegt und letztere von der Symmetrieebene bzw. von einem schematisch dargestellten Zahn 51 in nach aussen gekippte Stellung treibt.

Dadurch, dass der Auflagekörper 83 drehbeweglich auf dem ringförmigen Hohlkörper 79 gelagert ist und anderseits die Trägerbasis 6 drehbeweglich am Nocken 91 angeordnet ist, ist die Trägerpartie 4 insgesamt drehbeweglich in bezug auf das Kopfteil. Dies ist wichtig, um beim Reinigen der Zähne die Reinigungsborsten 10 jeweils der entsprechenden Zahnstellung anpassen zu können. Wie bereits vorab erwähnt, ist ja auch die Schale 3 drehbeweglich am Kopfteil 1 gelagert, womit insgesamt der ganze Reinigungskopf drehbeweglich am Kopfteil angeordnet ist und sich somit jederzeit der entsprechenden Zahnstellung anpassen kann.

Der Reinigungskopf gemäss Fig. 15a ist durch die nach aussen gerichtete Schwenkbewegung der Hebel 8 und damit der Reinigungsbürsten 10 bereit, um gegen den zu reinigenden Zahn 51 und Zahnfleisch 54 bewegt zu werden. Diese nach aussen Bewegung der Hebel 8 ist seitlich schematisch durch den Pfeil 1 dargestellt.

Nun wird die Welle 73a rotiert, und gemäss Fig. 15b erstreckt sich nun der Wellenabschnitt 75 von der Wellenachse 73a vom Kopfteil weg in Richtung zum zu reinigenden Zahn 51. Damit werden gleichzeitig der Grundkörper 89, der Schlitten 93 und der ringförmige Hohlkörper 79 gegen den zu reinigenden Zahn 51 getrieben, wobei die beiden Hebel 8 immer noch in nach aussen gekippter Stellung, entfernt vom Zahn 51, angeordnet sind. Die in der Fig. 15b ausgeführte Bewegung in Richtung zum Zahn 51 hin ist seitlich schematisch durch den Pfeil 2 dargestellt.

Durch weitere Rotation der Welle 73 in dieselbe Richtung greift nun der in den Fig. 15a bis 15d nicht sichtbare Abschnitt 77 an der Oeffnung 18b des Schlittens 93 an und treibt diesen in der Rinne 90 auf die entgegengesetzte Seite in bezug auf den Grundkörper 89, womit die Gleitpartie 94a des Schlittens 93 am Anschlag 85a des ringförmigen Hohlkörpers 79 anstösst und den Ring 79 zum Kopfteil hin zurückzieht, womit ebenfalls die Auflagekörper 83 zurückgezogen werden. Nun treiben die gegen die Rückseite der Hebel 8 vorgespannt anliegenden Blattfedern 69 die Hebel zusammen mit den Reinigungsborsten 10 gegen den zu reinigenden Zahn 51, und zwar im Bereich des Ansatzes von Zahn zu Zahnfleisch 54. Die in Fig. 15c ausgeführte Bewegung ist seitlich durch Pfeil 3 schematisch dargestellt.

Durch weitere Rotation der Welle 73 in derselben Richtung greift nun erneut Abschnitt 75 in der Oeffnung 80a des Grundkörpers 89 an, um diesen gegen das Kopfteil hin zurückzutreiben, womit zusammen ebenfalls der Schlitten 93 und der ringförmige Hohlkörper zurückgezogen werden. Durch diese Rückwärts-Hubbewegung wird auch die Trägerpartie zurückgezogen, womit die Reinigungsborsten 10 eine vom Zahnfleischansatz 51a zur Zahnspitze hin verlaufende Reinigungsoperation ausführen. Die in Fig. 15d ausgeführte Bewegung ist seitlich schematisch durch Pfeil 4 dargestellt. Nun ist der ganze Reinigungsvorgang abgeschlossen, und erneut wird nun Schlitten 93 durch weitere Rotation der Welle 73 wieder seitwärts verschoben, womit, wie in Fig. 15a dargestellt, die Gleitpartie 94b gegen den Anschlag 85b getrieben wird. Damit wird der ringförmige Hohlkörper 79 wieder nach oben getrieben, womit die beiden Hebel nach aussen gekippt werden. Damit ist der Kreis geschlossen, und der Bewegungsvorgang kann von neuem beginnen.

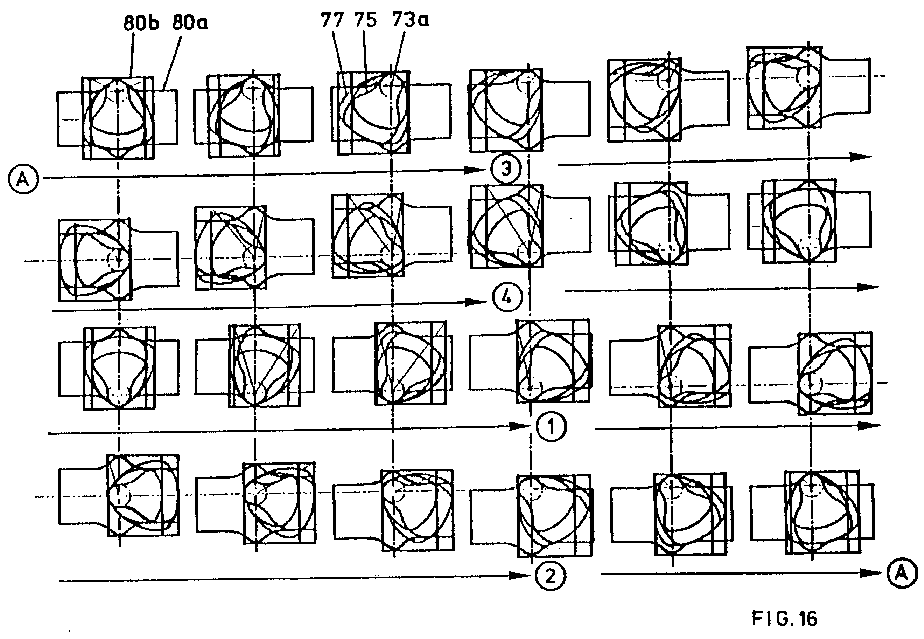

In Fig. 16 letztendlich ist der ganze Rotationsbewegungsablauf der Welle 73 bzw. der beiden Abschnitte 75 und 77 schematisch dargestellt, indem Abschnitt 75 in der Oeffnung 80b angreift und diese hin und her treibt, währenddem Abschnitt 75 an der Oeffnung 80a angreift und diese nach oben und nach unten treibt. Die in den Fig. 15a bis 15d dargestellten vier Bewegungsmomentanaufnahmen sind durch die Ziffern 1 bis 4 in Fig. 16 bezeichnet. Dazwischenliegend sind die verschiedenen Rotationspositionen der Welle 73 schematisch dargestellt.

Unter Bezug auf die Fig. 6 bis 16 ist eine spezielle beispielsweise bevorzugte Ausführungsvariante der Erfindung dargestellt und beschrieben, wobei die Erfindung in keiner Weise auf dieses Ausführungsbeispiel beschränkt ist. Wie bereits unter Bezug auf Fig. 1 bis 4 näher erläutert, ist es selbstverständlich möglich, die Zahnreinigungsorgane, wie beispielsweise Reinigungsbürsten, auf eine x-beliebige Art und Weise mechanisch und/oder elektromagnetisch anzutreiben. Erfindungswesentlich ist dabei, dass der mechanische und/oder elektromagnetische Antrieb durch die Verbindung von Reinigungskopf zu Kopfteil hindurch erfolgt, d.h. dass der eigentliche Antriebsmotor beispielsweise im Handgriff oder im Kopfteil angeordnet werden kann. Die Antriebsorgane können durch Seilzüge, Gestänge, Wellen, Getriebe etc. gebildet werden oder aber auch durch elektromagnetisch betriebene Elemente. Auch die Ausgestaltung des Reinigungskopfes selbst kann selbstverständlich auf x-beliebige Art und Weise modifiziert resp. variiert werden, wesentlich dabei ist, dass die im Reinigungskopf angeordneten Reinigungsorgane, wie beispielsweise Reinigungsborsten bzw. Borstenbündel, an den Zähnen und in bezug auf die Zähne mindestens zwei voneinander getrennte Bewegungsvorgänge ausführen können. Auch kann der Reinigungskopf einteilig ausgestaltet sein, indem beispielsweise die beschriebene Schale und die Trägerpartie einteilig sind.

## Patentansprüche

1. Zahnreinigungsvorrichtung mit einer Antriebsanordnung zum Unterstützen der Zahnreinigung mittels durch die Antriebsanordnung betriebener Reinigungsorgane, umfassend mindestens ein mechanisches und/oder elektromagnetisches Antriebsorgan (14, 18, 22, 24, 73), das mit den wenigstens zwei Reinigungsorgan (10, 12) wirkverbunden ist, dass ein Handgriff und ein Kopfteil (1) vorgesehen sind und die Reinigungsorgane (10, 12) an oder in einem wenigstens nahezu endständig am Kopfteil angeordneten Reinigungskopf (2) vorgesehen sind, dass der Reinigungskopf eine vom Zahn betrachtet konkave Trägerpartie (4) umfasst mit den wenigstens zwei Reinigungsorganen (10, 12) zur Umfassung der Zähne auf mindestens zwei ihrer Seiten, und dass das mindestens eine Antriebsorgan (14, 18, 22, 24, 73) derart am Kopfteil (1) im Bereich des endständig am Kopfteil angeordneten Reinigungskopfes (2) ausgebildet ist, dass sich die Wirkverbindung derart durch die Verbindung von Kopfteil und Reinigungskopf hindurch erstreckt, um an mindestens einem Teil der im Reinigungskopf angeordneten Reinigungsorgane (10, 12) mindestens zwei Relativbewegungen in bezug auf das Kopfteil zu bewirken.

2. Zahnreinigungsvorrichtung nach Anspruch 1, wobei der Reinigungskopf (2) wenigstens drehbeweglich und/oder schwenkbar mit dem Kopfteil (1) verbunden ist.

3. Zahnreinigungsvorrichtung nach einem der Ansprüche 1 bis 2, wobei der Reinigungskopf mindestens zweiteilig (3, 4) ausgebildet ist, wobei das eine Teil (4) beweglich mit dem anderen Teil (3) verbunden ist.

4. Zahnreinigungsvorrichtung nach Anspruch 3, wobei das eine Teil (4) durch die Trägerpartie gebildet wird, welche eine U-förmige Fassung aufweist mit mindestens an den Schenkeln (8) nach innen gekehrten Reinigungsorganen (10).

5. Zahnreinigungsvorrichtung nach einem der Ansprüche 3 oder 4, wobei die Trägerpartie (4) im wesentlichen gemeinsam mit dem anderen Teil (3) drehbeweglich und/oder schwenkbar am Kopfteil (1) gelagert ist und zudem die Trägerpartie relativbeweglich in bezug auf den anderen Teil angeordnet ist.

6. Zahnreinigungsvorrichtung nach einem der Ansprüche 3 bis 5, wobei die Trägerpartie U-förmig ausgebildet ist, umfassend eine Basis (6) und seitliche Schenkelabschnitte (8), welche Schenkelabschnitte um je eine im Bereich der Basis oder endständig angeordnete Achse (8a) in einer Bewegungsrichtung in Schenkelrichtung zueinander beweglich mit der Basis verbunden gelagert sind.

7. Zahnreinigungsvorrichtung nach Anspruch 6, wobei das mindestens eine Antriebsorgan einerseits mit der Basis wirkverbunden ist für die Durchführung einer Relativbewegung der Basis in bezug auf das Kopfteil bzw. das andere Teil des Reinigungskopfes und anderseits mit den Schenkelabschnitten für die Durchführung einer Relativschwenk- bzw. -kippbewegung der Abschnitte in bezug auf die Basis.

8. Zahnreinigungsvorrichtung nach einem der Ansprüche 6 oder 7, wobei das mindestens eine Antriebsorgan vorgesehen ist für je eine zyklische Bewegung von Basis und von den Schenkelabschnitten und dass die Reinigungsorgane in der U-Ebene in sich geschlossene, vorzugsweise zweidimensionale Bewegungsbahnen ausführen, wobei die gegen die U-Symmetrieachse gerichteten Bahnschenkel zur U-Basis bzw. zum Kopfteil hin gerichtet durchlaufen werden.

9. Zahnreinigungsvorrichtung nach einem der Ansprüche 6 bis 8, wobei die Schenkelabschnitte gegen die U-Symmetrieachse hin vorgespannt gelagert sind, so dass die Bewegung der Reinigungsorgane an den Schenkelabschnitten unter Reinigungsdruck in Richtung von einer Zahnwurzel bzw. dem Zahnfleisch zur Zahnkrone hin erfolgt und zurück unter zumindest reduziertem Druck unter Wirkung des bzw. der Antriebsorgane, welche gegen die Vorspannung wirken.

10. Zahnreinigungsvorrichtung nach einem der Ansprüche 6 bis 9, wobei die Tragerpartie zyklisch phasenverschoben zu den Schenkelabschnitten angesteuert wird, derart, dass bei einer Bewegung der Trägerpartie in Richtung im wesentlichen senkrecht vom Kopfteil weg die schenkelabschnitte weitgehendst in voneinander weggekippter Stellung angeordnet sind und bei der entgegengesetzten Bewegung der Trägerpartie zum Kopfteil hin die Schenkelabschnitte in zueinander geneigter Stellung angeordnet sind.

11. Zahnreinigungsvorrichtung nach einem der Ansprüche 1 bis 10, wobei mindestens ein Antriebsorgan (73) vorgesehen ist, das wellenförming ausgebildet ist, welche Welle im Bereich der Verbindung zwischen Kopfteil und Reinigungskopf mindestens zwei exzentrisch ausgebildete Abschnitte (75, 77) aufweist, wobei jeder Abschnitt je einen Bewegungsablauf wenigstens eines Teils der Reinigungsorgane bewirkt.

12. Zahnreinigungsvorrichtung nach Anspruch 11, wobei die Welle im wesentlichen gleichmässig rotierend angetrieben ist und einer der beiden exzentrisch ausgebildeten Abschnitte (75) mit der Trägerpartie (4) für das Ausführen der Hubbewegung in bezug auf das Kopfteil wirkverbunden ist und der andere Abschnitt (77) mit den Schenkelabschnitten (8) für das Ausführen der Schwenkbewegungen in bezug auf die Basis (6) der Tragerpartie, wobei die Abschnitte an der Welle derart zueinander winkelverschoben ausgebildet sind, dass die beiden Bewegungsvorgänge von mindestens einem Teil der Reinigungsorgane phasenverschoben ausgeführt werden.

13. Zahnreinigungsvorrichtung nach einem der Ansprüche 11 oder 12, wobei die im wesentlichen gleichmässig linear rotierende Welle in einem senkrecht zur Welle verschieblich gelagerten Grundkörper (89) angeordnet ist, wobei einer der exzentrisch ausgebildeten Abschnitte (75) der Welle eine erste Hin- und Her-Bewegung des Grundkörpers quer zur Wellenachse (73a) in Richtung aus dem bzw. in das Kopfteil (1) bewirkt, welcher Grundkörper (89) mit der Trägerpartie (4) verbunden ist; im Grundkörper ein schlittenartiges Element (93) angeordnet ist, das gemeinsam mit dem Grundkörper die erste Hin- und Her-Bewegung quer zur Welle ausführt, jedoch zusätzlich quer zur ersten Bewegungsrichtung und quer zur Wellenachse (73a) im Grundkörper hin und her bewegbar gelagert ist, wobei der andere exzentrisch ausgebildete Abschnitt (77) der Welle das schlittenartige Element (93) in einer zweiten Hin- und Her-Bewegung innerhalb des Grundkörpers (89) treibt, welches schlittenartige Element mit einem den Grundkörper parallel zur ersten Bewegungsrichtung verschieblich umgebenden, ringförmigen Element (79) derart bewegungsgekoppelt ist, dass bei Bewegung des Schlittens in einer Richtung das ringförmige Element (79) in Richtung zur Trägerpartie (4) hin bewegt wird, um an Vorsprüngen (8b) der Schenkelabschnitte (8) anzugreifen und die Reinigungsorgane (10) von der U-Symmetrieebene weg zu bewegen, und bei Bewegen des Schlittens in der entgegengesetzten Richtung das ringförmige Element von der Trägerpartie weg bewegt wird, womit die Schenkelabschnitte mit den Reinigungsorganen gegen die U-Symmetrie zurückkippen.

14. Zahnreinigungsvorrichtung nach Anspruch 13, wobei die erste und die zweite Hin- und Her-Bewegung derart phasenverschoben und aufeinander ausgerichtet sind, dass bei Bewegung des Grundkörpers (89) und damit der Trägerpartie (4) in Richtung vom Kopfteil (1) weg das ringförmige Element (79) nahe der Trägerpartie (4) angeordnet ist, um die Schenkelabschnitte (8) und die Reinigungsorgane (10) von der U-Symmetrieebene bzw. dem zu reinigenden Zahn (51) wegzutreiben, und dass bei Bewegung des Grundkörpers bzw. der Trägerpartie zum Kopfteil hin das ringförmige Element entfernt von der Trägerpartie angeordnet ist, damit die Schenkelabschnitte, getrieben vorzugsweise mittels blattfederartiger Mittel (69), gegen die Symmetrieebene geneigt angeordnet sind, um eine von der Zahnwurzel (51a) zur Zahnspitze hin erfolgende Reinigungsoperation auszuführen.

15. Zahnreinigungsvorrichtung nach einem der Ansprüche 1 bis 10, wobei ein oder mehrere Seilzüge (18, 18a) vorgesehen sind, mittels welcher die Bewegungsvorgänge der Reinigungsorgane (10) mindestens in einer Richtung ausführbar sind und gegebenenfalls federnd oder elastisch ausgebildete Rückstellmittel (11), um bei Entspannen des oder der Seilzüge den Bewegungsvorgang in entgegengesetzter Richtung zu bewirken.

16. Zahnreinigungsvorrichtung nach Anspruch 15, wobei der oder die Seilzüge aus einem im wesentlichen kaum dehnbaren, abriebfesten, elastischen, fadenartig ausgebildeten Kunststoffmaterial besteht(en), beispielsweise geeignet für die Herstellung von technischen Garnen.

17. Zahnreinigungsvorrichtung nach einem der Ansprüche 15 oder 16, wobei der oder die Seilzüge aus einem aromatischen Polyamid besteht(en).

18. Zahnreinigungsvorrichtung nach einem der Ansprüche 1 bis 10, wobei als Antriebsorgan mindestens eine Nockenwelle (14) vorgesehen ist.

19. Zahnreinigungsvorrichtung nach einem der Ansprüche 1 bis 10, wobei als Antriebsorgan ein oder mehrere stangenartige Elemente (14, 18) vorgesehen sind, welche, bewegt in Richtung zu oder von den zu betreibenden Reinigungsorganen, die Bewegungsvorgänge bewirken.

20. Zahnreinigungsvorrichtung nach einem der Ansprüche 6 bis 10, wobei die Schenkelabschnitte an der Trägerpartie mittels einer getriebeartigen Uebertragung (36-40) bewegt werden, wobei das Getriebe mittels eines Gestänges (18, 34) oder eines Seilzuges betrieben wird.

21. Zahnreinigungsvorrichtung nach einem der Ansprüche 1 bis 10, wobei an den Reinigungsorganen metallartige Elemente (21, 23) angeordnet sind und in entgegengesetzten Abschnitten am Reinigungskopf und/oder am Kopfteil Elektromagnete (22, 24) angeordnet sind, wobei durch Betätigung der letzteren die Bewegungsvorgänge der Reinigungsorgane bewirkt werden.

22. Zahnreinigungsvorrichtung nach Anspruch 21, wobei die Reinigungsorgane mit den Metallelementen von den entsprechenden Elektromagneten weg vorgespannt angeordnet sind, um bei Nichtbetätigung der Elektromagnete die Reinigungsorgane in Richtung von diesen weg zu treiben.

23. Zahnreinigungsvorrichtung nach einem der Ansprüche 1 bis 22, wobei die Reinigungsorgane Borstenbündel sind.

24. Zahnreinigungsvorrichtung nach einem der Ansprüche 6 bis 23, wobei die Schenkelabschnitte mittels von zu den Reinigungsorganen entgegengesetzten Seiten angreifender blattfederartiger Spannmittel (69) gegen die U-Symmetrieebene vorgespannt sind, wobei die Blattfedern derart an der Basis der Trägerpartie angeordnet sind, dass sich deren Drehpunkt (72) beim Abkippen der Schenkelabschnitte in Basislängsrichtung verschiebt, damit die Federkraft infolge ungleicher Hebelwirkung unterschiedlich ist und dadurch der Anpressdruck der Reinigungsorgane an den zu reinigenden Zahn in etwa gleich bleibt.

25. Zahnreinigungsvorrichtung nach einem der Ansprüche 1 bis 24, wobei der Reinigungskopf und/oder das Kopfteil um ca. 180° drehbar um die Handgriffachse am Kopfteil bzw. am Handgriff angeordnet ist, um das Reinigen der oberen bzw. der unteren Zähne bei gleicher Handgriffhaltung zu ermöglichen.

## Claims

1. Tooth-cleaning device with a drive arrangement for assisting dental cleaning by means of cleaning members that are driven by the drive arrangement, comprising at least one mechanical and/or electromechanical drive member (14, 18, 22, 24, 73) which is operationally linked to the at least two cleaning members (10, 12), wherein a handle and a head part (1) are provided and the cleaning members (10, 12) are provided on or in a cleaning head (2) that is arranged at least almost on the end of the head part, wherein the cleaning head comprises a carrier portion (4) which is concave when observed from the tooth, said carrier portion having the at least two cleaning members (10, 12) for embracing the teeth on at least two of their sides, and wherein the at least one drive member (14, 18, 22, 24, 73) is constructed in such a way on the head part (1) in the region of the cleaning head (2) arranged on the end of the head part that the operational link extends through the connection of head part and cleaning head in such a way as to bring about, in respect of at least a proportion of the cleaning members (10, 12) arranged in the cleaning head, at least two relative movements in relation to the head part.

2. Tooth-cleaning device according to Claim 1, wherein the cleaning head (2) is connected to the head part (1) at least so as to be capable of rotary motion and/or to be capable of pivoting.

3. Tooth-cleaning device according to one of Claims 1 to 2, wherein the cleaning head is constructed in at least two parts (3, 4), one part (4) being movably connected to the other part (3).

4. Tooth-cleaning device according to Claim 3, wherein one part (4) is formed by the carrier portion which comprises a U-shaped socket with cleaning members (10) turned inwards at least on the shanks (8).

5. Tooth-cleaning device according to one of Claims 3 or 4, wherein the carrier portion (4) is supported on the head part (1) substantially jointly with the other part (3) so as to be capable of rotary motion and/or to be capable of pivoting and in addition the carrier portion is arranged so as to be relatively mobile in relation to the other part.

6. Tooth-cleaning device according to one of Claims 3 to 5, wherein the carrier portion is of U-shaped construction, comprising a base (6) and lateral shank sections (8), said shank sections being supported so as to be connected to the base movably in relation to one another in a direction of motion in the direction of the shank about, in each case, an axis (8a) arranged in the region of the base or terminally.

7. Tooth-cleaning device according to Claim 6, wherein the at least one drive member is operationally linked, on the one hand, to the base for the execution of a relative movement of the base in relation to the head part or the other part of the cleaning head and, on the other hand, to the shank sections for the execution of a relative pivoting or tilting movement of the sections in relation to the base.

8. Tooth-cleaning device according to one of Claims 6 or 7, wherein the at least one drive member is provided for, in each case, a cyclic movement of the base and of the shank sections and wherein the cleaning members execute preferably two-dimensional paths of motion that are closed in themselves in the U-plane, the shanks of the paths directed towards the axis of the symmetry of the U being traversed in a direction towards the base of the U or towards the head part.

9. Tooth-cleaning device according to one of Claims 6 to 8, wherein the shank sections are supported so as to be prestressed in the direction towards the axis of symmetry of the U so that the movement of the cleaning members on the shank sections takes place under cleaning pressure in the direction from a tooth root or from the gum towards the crown of the tooth and back under at least reduced pressure subject to the action of the drive member(s) which act against the prestressing.

10. Tooth-cleaning device according to one of Claims 6 to 9, wherein the carrier portion is triggered in cyclically phase-shifted manner in relation to the shank sections in such a way that in the event of a movement of the carrier portion in the substantially perpendicular direction away from the head part the shank sections are to a very great extent arranged in positions tilted away from one another and in the event of the opposite movement of the carrier portion towards the head part the shank sections are arranged in positions inclined towards one another.

11. Tooth-cleaning device according to one of Claims 1 to 10, wherein at least one drive member (73) is provided which is constructed in the form of a shaft, said shaft comprising in the region of the connection between head part and cleaning head at least two eccentrically constructed sections (75, 77), each section bringing about, in each case, a sequence of movements of at least a proportion of the cleaning members.

12. Tooth-cleaning device according to Claim 11, wherein the shaft is driven substantially in uniformly rotating manner and one of the two eccentrically constructed sections (75) is operationally linked to the carrier portion (4) for execution of the reciprocating movement in relation to the head part and the other section (77) is operationally linked to the shank sections (8) for execution of the pivoting movements in relation to the base (6) of the carrier portion, the sections being constructed on the shaft in angularly offset relation to one another in such a way that the two movement operations of at least a proportion of the cleaning members are executed in phase-shifted manner.

13. Tooth-cleaning device according to one of Claims 11 or 12, wherein the shaft that rotates substantially in uniform linear manner is arranged in a basic structure (89) which is slidably supported perpendicular to the shaft, whereby one of the eccentrically constructed sections (75) of the shaft brings about a first to-and-fro movement of the basic structure transverse to the shaft axis (73a) in the direction out of or into the head part (1), said basic structure (89) being connected to the carrier portion (4); a slide-type element (93) is arranged in the basic structure, said slide-type element executing jointly with the basic structure the first to-and-fro movement transverse to the shaft but in addition being supported in the basic structure so as to be capable of moving to and fro transverse to the first direction of motion and transverse to the shaft axis (73a), whereby the other eccentrically constructed section (77) of the shaft drives the slide-type element (93) in a second to-and-fro movement within the basic structure (89), said slide-type element being kinetically coupled in such a way to an annular element (79) slidably surrounding the basic structure parallel to the first direction of motion that, upon movement of the slide in one direction, the annular element (79) is moved in the direction towards the carrier portion (4) in order to engage projections (8b) of the shank sections (8) and to move the cleaning members (10) away from the plane of symmetry of the U and, upon movement of the slide in the opposite direction, the annular element is moved away from the carrier portion, as a result of which the shank sections with the cleaning members tilt back towards the symmetry of the U.

14. Tooth-cleaning device according to Claim 13, wherein the first and the second to-and-fro movements are phase-shifted and aligned with one another in such a way that upon movement of the basic structure (89) and hence of the carrier Portion (4) in the direction away from the head part (1) the annular element (79) is arranged near the carrier portion (4) in order to drive the shank sections (8) and the cleaning members (10) away from the plane of symmetry of the U or from the tooth (51) to be cleaned, and wherein upon movement of the basic structure or of the carrier portion towards the head part the annular element is arranged remote from the carrier portion in order that the shank sections, driven preferably with the aid of means (69) of leaf-spring type, are arranged inclined towards the plane of symmetry in order to perform a cleaning operation that takes place from the root (51a) of the tooth towards the crest of the tooth.

15. Tooth-cleaning device according to one of Claims 1 to 10, wherein one or more pull cables (18, 18a) are provided, by means of which the movement operations of the cleaning members (10) are capable of being executed at least in one direction, and restoring means (11), optionally of resilient or elastic construction, in order in the event of relaxation of the pull cable or pull cables to bring about the movement operation in the opposite direction.

16. Tooth-cleaning device according to Claim 15, wherein the pull cable or pull cables consist(s) of a synthetic material that is substantially barely extensible, abrasion-resistant, elastic and thread-like, suitable for the production of technical yarns for example.

17. Tooth-cleaning device according to one of Claims 15 or 16, wherein the pull cable or pull cables consist(s) of an aromatic polyamide.

18. Tooth-cleaning device according to one of Claims 1 to 10, wherein by way of drive member at least one camshaft (14) is provided.

19. Tooth-cleaning device according to one of Claims 1 to 10, wherein by way of drive member one or more rod-type elements (14, 18) are provided which, moved in the direction towards or away from the cleaning members to be driven, bring about the movement operations.

20. Tooth-cleaning device according to one of Claims 6 to 10, wherein the shank sections on the carrier portion are moved by means of a gearing-type transmission (36-40), the gearing being operated by means of a linkage (18, 34) or a pull cable.

21. Tooth-cleaning device according to one of Claims 1 to 10, wherein metallic elements (21, 23) are arranged on the cleaning members and electromagnets (22, 24) are arranged in opposite sections on the cleaning head and/or on the head part, the movement operations of the cleaning members being brought about as a result of actuation of said electromagnets.

22. Tooth-cleaning device according to Claim 21, wherein the cleaning members with the metal elements are arranged so as to be prestressed in the direction away from the corresponding electromagnets in order to drive the cleaning members in the direction away from said electromagnets when the latter are not actuated.

23. Tooth-cleaning device according to one of Claims 1 to 22, wherein the cleaning members are bundles of bristles.

24. Tooth-cleaning device according to one of Claims 6 to 23, wherein the shank sections are prestressed in the direction towards the plane of symmetry of the U by means of tensioning means (69) of leaf-spring type that engage from sides opposite the cleaning members, the leaf springs being arranged at the base of the carrier portion in such a way that, when the shank sections are tilted down, the pivotal point (72) of said leaf springs is displaced in the longitudinal direction of the base in order that the spring force is variable as a consequence of unequal lever action and thereby the contact pressure of the cleaning members on the tooth to be cleaned remains roughly the same.

25. Tooth-cleaning device according to one of Claims 1 to 24, wherein the cleaning head and/or the head part is arranged on the head part or on the handle so as to be capable of rotation by approximately 180° about the axis of the handle in order to enable cleaning of the upper and the lower teeth, respectively, in the game handle position.

## Revendications

1. Dispositif de nettoyage dentaire comportant un dispositif d'entraînement qui est destiné à améliorer le nettoyage des dents à l'aide d'organes de nettoyage commandés par le dispositif d'entraînement, et qui comprend au moins un organe d'entraînement mécanique et/ou électromagnétique (14, 18, 22, 24, 73) en relation fonctionnelle avec les deux organes de nettoyage (10, 12), ou plus, dans lequel une poignée et une partie de tête (1) sont prévues et les organes de nettoyage (10, 12) sont prévus sur ou dans une tête de nettoyage (2) disposée au moins approximativement à l'extrémité de la partie de tête ; dans lequel la tête de nettoyage comprend une partie de support (4) qui est concave, à partir de la dent, et qui porte les organes de nettoyage (10, 12) destinés à entourer les dents sur au moins deux côtés ; et dans lequel le ou les organes d'entraînement (14, 18, 22, 24, 73) sont conçus sur la partie de tête (1), dans la zone de la tête de nettoyage (2) disposée à l'extrémité de ladite partie de tête, de telle sorte que la liaison fonctionnelle traverse la liaison entre partie de tête et tête de nettoyage afin de provoguer au moins deux mouvements relatifs par rapport à la partie de tête sur une partie au moins des organes de nettoyage (10, 12) disposés dans la tête de nettoyage.

2. Dispositif de nettoyage dentaire selon la revendication 1, dans lequel la tête de nettoyage (2) est reliée à la partie de tête (1) en étant au moins mobile en rotation et/ou apte à pivoter.

3. Dispositif de nettoyage dentaire selon la revendication 1 ou 2, dans lequel la tête de nettoyage est conçue au moins en deux parties (3, 4), la première (4) étant reliée, mobile, à la seconde (3).

4. Dispositif de nettoyage dentaire selon la revendication 3, dans lequel la première partie (4) est formée par la partie de support qui présente une monture en U pourvue au moins sur les branches (8) d'organes de nettoyage (10) tournés vers l'intérieur.

5. Dispositif de nettoyage dentaire selon la revendication 3 ou 4, dans lequel la partie de support (4) es montée sur la partie de tête (1) en étant mobile en rotation et/ou apte à pivoter globalement conjointement avec la seconde partie (3), et la partie de support est par ailleurs mobile par rapport à la seconde partie.

6. Dispositif de nettoyage dentaire selon l'une des revendications 3 à 5, dans lequel la partie de support a la forme d'un U et comprend une base (6) et des sections latérales formant branches (8) qui sont reliées à la base en étant mobiles l'une vers l'autre, dans le sens des branches, autour d'axes respectifs (8a) disposés dans la zone de la base ou à l'extrémité.

7. Dispositif de nettoyage dentaire selon la revendication 6, dans lequel le ou les organes d'entraînement sont reliés d'une part à le base suivant une relation fonctionnelle, en vue d'un mouvement relatif de la base par rapport à la partie de tête ou à la seconde partie de la tête de nettoyage, et d'autre part aux sections formant branches en vue d'un mouvement relatif pivotant ou basculant des sections par rapport à la base.

8. Dispositif de nettoyage dentaire selon la revendication 6 ou 7, dans lequel le ou les organes d'entraînement sont prévus en vue d'un mouvement cyclique de la base et des sections formant branches, et les organes de nettoyage prévus dans le plan en U décrivent des trajectoires fermées, de préférence à deux dimensions, les branches des trajectoires dirigées vers l'axe de symétrie du U étant parcourues en direction de la base du U ou de la partie de tête.

9. Dispositif de nettoyage dentaire selon l'une des revendications 6 à 8, dans lequel les sections formant branches sont montées en étant contraintes en direction de l'axe de symétrie du U, de sorte que le mouvement des organes de nettoyage prévus sur les sections formant branches qui est décrit d'une racine de dent ou de la gencive vers la couronne de la dent se fait sous une pression de nettoyage, et celui qui est décrit dans le sens inverse se fait sous une pression au moins réduite, sous l'action du ou des organes d'entraînement qui agissent à l'encontre de la contrainte.

10. Dispositif de nettoyage dentaire selon l'une des revendications 6 à 9, dans lequel la partie de support est commandée de façon déphasée cycliquement par rapport aux sections formant branches, de telle sorte que lors d'un mouvement de la partie de support dans une direction globalement perpendiculaire et qui l'éloigne de la partie de tête, les sections formant branches sont très largement basculées et éloignées l'une de l'autre, et lors du mouvement contraire de la partie de support vers la partie de tête, le sections formant branches sont inclinées l'une vers l'autre.

11. Dispositif de nettoyage dentaire selon l'une des revendications 1 à 10, dans lequel il est prévu au moins un organe d'entraînement (73) qui a la forme d'un arbre, lequel arbre présente dans la zone de liaison entre la partie de tête et la tête de nettoyage au moins deux sections excentriques (75, 77), chaque section provoquant le mouvement d'une partie au moins des organes de nettoyage.

12. Dispositif de nettoyage dentaire selon la revendication 11, dans lequel l'arbre est entraîné suivant une rotation globalement régulière et l'une des deux sections excentriques (75) est reliée suivant une relation fonctionnelle à la partie de support (4) en vue de la course par rapport à la partie de tête, tandis que l'autre section (77) est reliée aux sections formant branches (8) en vue des mouvements pivotants par rapport à la base (6) de la partie de support, étant précisé que les sections de l'arbre présentent l'une par rapport à l'autre un décalage angulaire tel que les deux mouvements d'une partie au moins des organes de nettoyage sont déphasés.

13. Dispositif de nettoyage dentaire selon la revendication 11 ou 12, dans lequel l'arbre soumis à une rotation linéaire globalement régulière est disposé dans un corps de base (89) monté mobile perpendiculairement à l'arbre, étant précisé que l'une des sections excentriques (75) de l'arbre provoque un premier mouvement alternatif du corps de base transversalement par rapport à l'axe d'arbre (73a), qui l'éloigne et le rapproche de la partie de tête (1), lequel corps de base (89) est relié à la partie de support (4) ; dans le corps de base est disposé un élément en forme de coulisseau (93) qui décrit avec lui le premier mouvement alternatif transversal par rapport à l'arbre, mais qui est en outre monté mobile suivant un mouvement alternatif dans le corps de base, transversalement par rapport au premier sens de mouvement et à l'axe d'arbre (73a), l'autre section excentrique (77) de l'arbre entraînant l'élément en forme de coulisseau (93) dans un second mouvement alternatif à l'intérieur du corps de base (89), lequel élément en forme de coulisseau est accouplé pour son mouvement à un élément annulaire (79) qui entoure le corps de base avec une mobilité parallèle au premier sens de mouvement, de telle sorte que lors d'un mouvement du coulisseau dans un sens, l'élément annulaire (79) est déplacé en direction de la partie de support (4) afin d'agir au niveau de saillies (8b) des sections formant branches (8) et d'éloigner les organes de nettoyage (10) du plan de symétrie du U, et que lors d'un mouvement du coulisseau en sens inverse, l'élément annulaire est éloigné de la partie de support et les sections formant branches qui portent les organes de nettoyage pivotent ainsi pour revenir vers l'axe de symétrie du U.

14. Dispositif de nettoyage dentaire selon la revendication 13, dans lequel le premier et le second mouvement alternatif sont déphasés et orientés l'un par rapport à l'autre de telle sorte que lors d'un mouvement du corps de base (89) et donc de la partie de support (4) qui les éloigne de la partie de tête (1), l'élément annulaire (79) est disposé près de la partie de support (4) afin d'éloigner les sections formant branches (8) et les organes de nettoyage (10) du plan de symétrie du U et de la dent à nettoyer (51), et que lors d'un mouvement du corps de base et de la partie de support en direction de la partie de tête, l'élément annulaire est disposé loin de la partie de support pour que les sections formant branches, poussées de préférence par des moyens en forme de ressorts à lames (69), soient inclinées vers le plan de symétrie afin de procéder à une opération de nettoyage qui va de la racine (51a) vers la pointe de la dent.

15. Dispositif de nettoyage dentaire selon l'une des revendications 1 à 10, dans lequel sont prévus une ou plusieurs commandes par câbles (18, 18a) à l'aide desquelles les mouvements des organes de nettoyage (10) peuvent être décrits au moins dans un sens, et éventuellement des moyens de rappel (11) faisant ressort ou élastiques destinés à provoquer le mouvement en sens inverse lors du relâchement de la ou des commandes par câbles.

16. Dispositif de nettoyage dentaire selon la revendication 15, dans lequel la ou les commandes par câbles se composent d'une matière plastique globalement à peine expansible, résistant à l'usure, élastique et conçue comme un fil, qui convient par exemple pour la fabrication de fils techniques.

17. Dispositif de nettoyage dentaire selon la revendication 15 ou 16, dans lequel la ou les commandes par câbles se composent d'un polyamide aromatique.

18. Dispositif de nettoyage dentaire selon l'une des revendications 1 à 10, dans lequel on prévoit comme organe d'entraînement au moins un arbre à came (14).

19. Dispositif de nettoyage dentaire selon l'une des revendications 1 à 10, dans lequel on prévoit comme organe d'entraînement un ou plusieurs éléments en forme de tringles (14, 18) qui, rapprochés ou éloignés des organes de nettoyage à actionner, provoquent les mouvements.

20. Dispositif de nettoyage dentaire selon l'une des revendications 6 à 10, dans lequel les sections formant branches prévues sur la partie de support sont déplacées à l'aide d'une transmission du type à engrenage (36-40), l'engrenage étant commandé à l'aide d'une tringlerie (18, 34) ou d'une commande par câble.

21. Dispositif de nettoyage dentaire selon l'une des revendications 1 à 10, dans lequel des éléments de type métallique (21, 23) sont disposés sur les organes de nettoyage et des électro-aimants (22, 24) sont disposés dans des sections opposées de la tête de nettoyage et/ou de la partie de tête, l'actionnement des électro-aimants provoquant les mouvements des organes de nettoyage.

22. Dispositif de nettoyage dentaire selon la revendication 21, dans lequel les organes de nettoyage pourvus des éléments métalliques sont disposés en étant contraints pour être éloignés des électro-aimants correspondants, afin d'être éloignés des électro-aimants quand ceux-ci ne sont pas actionnés.

23. Dispositif de nettoyage dentaire selon l'une des revendications 1 à 22, dans lequel les organes de nettoyage sont des faisceaux de poils.

24. Dispositif de nettoyage dentaire selon l'une des revendications 6 à 23, dans lequel les sections formant branches sont contraintes en direction du plan de symétrie du U à l'aide de moyens de tension en forme de ressorts à lames (69) qui agissent par les côtés opposés aux organes de nettoyage, les ressorts a lames étant disposés sur la base de la partie de support de telle sorte que le centre de rotation (72) de celle-ci se déplace dans le sens longitudinal de la base lors du basculement des sections formant branches, pour que la force de ressort soit différente en raison de l'action de levier inégale, et que la pression d'application des organes de nettoyage contre la dent à nettoyer reste ainsi a peu près la même.

25. Dispositif de nettoyage dentaire selon l'une des revendications 1 à 24, dans lequel la tête de nettoyage et/ou la partie de tête sont disposées sur la partie de tête et sur la poignée, respectivement, pour pouvoir pivoter d'environ 180° autour de l'axe de la poignée afin de permettre de nettoyer les dents du haut et les dents du bas en tenant la poignée de la même manière.
